# EUROPEAN PATENT APPLICATION

(11) **EP 2 845 895 A1**
(43) Date of publication of application: **11.03.2015**
(21) Application number: 13183238.8
(22) Date of filing: 05.09.2013
(51) Int. Cl.: C11C 5/00, C08F 18/04, C08F 18/14, C08F 220/18

(54) **Additive for candle fatty acid wax composition**

(71) Applicant: OLEON NV, 9940 Ertvelde (BE)
(72) Inventor: VAN OPSTAL, Niels, B - 2801 Mechelen (BE); PACKET, Dirk, B - 3000 Leuven (BE); VAN DE VELDE, Stefan, B - 9991 Maldegem-Adegem (BE)
(74) Representative: Campabadal i Monfà, Gemma

(57) **Abstract**

This invention relates to a candle fatty acid wax composition characterized in that it comprises as additive, at least one homopolymer of a monomer of formula (X), or at least one copolymer of the monomers of formula (X), stereoisomers, and any mixture thereof,

R¹ - CH = CR³R⁴ (X)

wherein
R¹ is each independently selected from hydrogen, -C(=O)-OR⁵, and -CH₂-C(=O)-OR⁵;
R³ is each independently selected from hydrogen, -CH₃,-C(=O)-OR⁵, and -CH₂-C(=O)-OR⁵;
R⁴ is each independently selected from -C(=O)-OR⁵, -O-C(=O)-R⁵, and -CH₂-C(=O)-OR⁵; and
R⁵ is each independently a C₁₂₋₂₂alkyl;
said additive having a peak molecular weight of between 25.000 and 250.000 g/mole (according to gel permeation chromatography (GPC) measurement).

## Description

### TECHNICAL FIELD

The present invention relates to a candle wax composition, in particular a candle wax composition suitable for mixing with the usual ingredients to obtain a final candle product with the desired quality and characteristics.

### BACKGROUND ART

Candles have been known and used for illumination purposes since early civilization. Although a wide variety of advanced illuminating devices is available nowadays, candles are still popularly used for decoration.

A typical candle is produced by embedding a fibrous wick within a solid or semi-solid body of combustible candle wax material. Early candles were manufactured from naturally available fuel sources, which included waxes such as bees wax and oils such as spermaceti, olive oil, and tallow. Beeswax became scarce and costly and after serving for several years as a renewable base material for candle production, nowadays it is no longer considered as a common candle base wax. With the development of the petroleum industry, refined paraffin wax became the primary industrial wax product. The ongoing development of other applications which provide better valorisation of paraffin together with the increasing tendency to use renewable materials instead of non-renewable ones in candle production, has resulted in a shift towards mixtures of paraffin with other waxes, e.g. biodegradable waxes, thus becoming more popular raw materials for candle production.

Although the raw materials used for candle production may have evolved with time, certain physical characteristics have to be maintained such as those in terms of melting point, hardness and malleability that permit the base wax to be readily formed into candles with a pleasing appearance or haptic touch, as well as having desirable olfactory properties. Ideally, a candle wax is solid at ambient temperatures, but readily melts to form a liquid at elevated temperature. Predominately petroleum based candles exhibit a desired amorphous solid structure, as opposed to the non-aesthetic visible crystalline structure which often appears with stearic acid based candles. The solid structure of candles is not only important from an aesthetic point of view but also for the candle burning performance, as it affects the burning characteristics of the candle. Attempts to formulate candle waxes from vegetable-oil based materials have suffered from a variety of problems, such as cracking of the candle, air pocket formation, product shrinkage, undesirable blooming/frosting due to crystallization of triglycerides and fatty acids during the phase changing from liquid to solid, pits, bubbles or holes, poor burning performance and low wax consumption.

With the increasing tendency to use renewable materials in candle production and the undesired non-aesthetic visible crystalline structure appearing with stearic acid based candles, there is a need for a fatty acid based candle wax composition in which the risk to the occurrence of visible crystals may be reduced.

US6,599,334 discloses a vegetable-based candle manufactured from a renewable source which consists of at least 85 % of partially hydrogenated soybean oil, 0-4 % of a second hydrogenated vegetable or petroleum oil and up to 4% of synthetic wax. The synthetic wax is formed by co- polymerizing α-olefins in the presence of free radicals at low pressure. Examples of such synthetic waxes include Vybar-260 by Baker Petrolite, the materials disclosed in US4,060,569 and those disclosed in US4,239,546 of the type RR'C = CH₂.

The resultant co-polymerised hydrocarbon polymers have high viscosity, a melting point that is low in comparison with their molecular weight and a low shrinkage. Because of the low degree of crystallinity that is apparent from their low density, the co-polymerised hydrocarbon polymers may help to increase the opacity of the candle, bind and disperse fragrance oils throughout the candle composition, harden the candle and reduce the formation of air bubbles. The candle is said to burn cleanly without the production of soot, and to cleanly melt away from the container walls. US6,599,334 does however not address the problem of unwanted crystallisation of the candle wax material, i.e. the vegetable oil, which is accompanied by the formation of visible crystals.

US2010/0212214 discloses a candle composition comprising fatty alcohol and vegetable-based wax, wherein the fatty alcohol comprises 0.5% to 99.5% by mass of the total composition. The vegetable-based wax may include solid and/or semi-solid triglycerides, mono- and diglycerides, fatty acids, non-hydrogenated lipids and mixtures thereof. It is assumed that the amphipathic fatty alcohols function as non-ionic emulsifying surfactants, which inhibit crystallization of the triglyceride and fatty acid and thereby prevent the sharp phase change from liquid to solid during the congealing process of the wax composition. The result is a lower likelihood of crystallization, tension build-up within the wax and less cracking.

NL8700211 solves the problem of providing a candle wax composition with an improved plasticity, capable of providing solid candles with a smooth, crack free surface. The wax composition comprises stearic and palmitic acid in a ratio varying from 20-80:80-20, 0.5-10 wt. % of a crystal modifier and 0.5-10 wt. % of a different C₁₂-C₁₄ and/or C₂₀-C₂₂ fatty acid or fatty acid derivative having an adjacent hydrocarbon chain length. The crystal modifier can for example be an ester of a polyol with a higher fatty acid and/or dimer thereof.

DE1,217,942 discloses the use of a wide variety of esters, in particular of polyvinylesters of fatty acids containing 16-22 carbon atoms, for example polyvinylstearate or polyvinylesters of oil acid; mixed polyvinylesters of acetic acid and another fatty acid, for example polyvinylacetate palmitate and polvinylacetate stearate; aluminium salts of fatty acids, triglyceride polymers obtained by oxidation of fats and oils and polyamide resins as crystal growth promoter in a process of effecting in a single crystallisation step a sharp separation of saturated from unsaturated fatty acids or fatty triglycerides. According to the teachings of DE1,217,942, these substances have the effect of promoting or controlling the crystal growth of the saturated fatty acids or triglycerides.

In view of the increasing tendency to use renewable materials in candle production and the non-aesthetic visible crystalline structure which is common to stearic acid based candles, there is a need for a fatty acid based candle wax composition that shows a reduced risk of occurrence of visible crystals. The present invention therefore seeks to provide a fatty acid based candle wax composition which fulfils these needs.

This is achieved according to the present invention with a candle wax composition showing the technical features of the characterising portion of the first claim.

### SUMMARY OF THE INVENTION

The present invention relates to a candle fatty acid wax composition characterized in that it comprises as additive, at least one homopolymer of a monomer of formula (X), or at least one copolymer of the monomers of formula (X), stereoisomers, and any mixture thereof,

R¹ - CH = CR³R⁴ (X)

wherein
R¹ is each independently selected from hydrogen, -C(=O)-OR⁵, and -CH₂-C(=O)-OR⁵;
R³ is each independently selected from hydrogen, -CH₃, - C(=O)-OR⁵, and -CH₂-C(=O)-OR⁵;
R⁴ is each independently selected from -C(=O)-OR⁵, -O-C(=O)-R⁵, and -CH₂-C(=O)-OR⁵; and
R⁵ is each independently a C₁₂₋₂₂alkyl;
said additive having a peak molecular weight of between 25.000 and 250.000 g/mole (according to gel permeation chromatography (GPC) measurement).

In one embodiment regarding the additive of the candle fatty acid wax composition, R¹ and R³ are hydrogen and R⁴ is -C(=O)-OR⁵.

In one embodiment regarding the additive of the candle fatty acid wax composition, R¹ is hydrogen, R³ is CH₃, and R⁴ is -C(=O)-OR⁵.

In one embodiment regarding the additive of the candle fatty acid wax composition, R¹ is -C(=O)-OR⁵, R³ is CH₃, and R⁴ is -C(=O)-OR⁵, said R¹ and R⁴ substituents being configured in cis or trans relative to each other

In one embodiment regarding the additive of the candle fatty acid wax composition, R¹ and R³ are hydrogen and R⁴ is -O-C(=O)-R⁵.

In one embodiment regarding the additive of the candle fatty acid wax composition, R³ is hydrogen, and R¹ and R⁴ are -C(=O)-OR⁵,said R¹ and R⁴ substituents being configured in cis or trans relative to each other.

In one embodiment regarding the additive of the candle fatty acid wax composition, R¹ is hydrogen, R³ is -C(=O)-OR⁵ and R⁴ is -CH₂-C(=O)-OR⁵.

In one embodiment regarding the additive of the candle fatty acid wax composition, R¹ and R³ are -C(=O)-OR⁵ and R⁴ is -CH₂-C(=O)-OR⁵, said R¹ and R³ substituents being configured in cis or trans relative to each other.

In one embodiment regarding the additive of the candle fatty acid wax composition, R¹ is -CH₂-C(=O)-OR⁵, R³ is hydrogen, and R⁴ is - C(=O)-OR⁵, said R¹ and R⁴ substituents being configured in cis or trans relative to each other.

In one embodiment regarding the additive of the candle fatty acid wax composition, in formula (X), R⁵ may be independently of each other a C₁₆₋₂₂alkyl; preferably a C₁₆₋₁₈alkyl; preferably a C₁₆alkyl and a C₁₈alkyl within the same homopolymer.

In one embodiment, the additive is a mixture of two or more homopolymers or copolymers of a monomer of formula (X), and stereoisomers thereof.

In one embodiment, the peak molecular weight of the additive is between 25.000 g/mole and 150.000 g/mole (according to GPC measurement).

In one embodiment, the additive is comprised in the fatty acid wax composition in an amount of less than 1000 ppm relative to the fatty acid wax composition, preferably less than 500 ppm, and at least 50 ppm, preferably at least 100 ppm.

In one embodiment, the fatty acid wax composition comprises at least one C₁₂-C₂₂ fatty acid, preferably at least one C₁₆-C₂₂ fatty acid or a mixture of two or more thereof, wherein the fatty acid may be saturated or unsaturated.

In one embodiment regarding the fatty acid wax composition, the fatty acid comprises between 30-70 wt. % of palmitic acid, preferably 40-60 wt. %, more preferably 40-55 wt. %, with respect to the weight of the fatty acid composition.

In one embodiment regarding the fatty acid wax composition, the fatty acid comprises between 30-100 wt. % of stearic acid, preferably 30-70 wt. %, with respect to the weight of the fatty acid composition.

The invention further relates to a process for producing a candle fatty acid wax composition according to any one of the embodiments encompassed herein, wherein an additive as defined in any one of the embodiments herein is mixed with a fatty acid wax composition to obtain a candle wax composition.

The invention further relates to a candle fatty acid composition obtainable according to the process above, or obtainable from the candle fatty acid wax composition according to any one of the embodiments presented herein.

The invention further relates to the use of an additive as defined in any one of the embodiments herein as a crystallisation inhibitor for a candle fatty acid wax.

### DESCRIPTION OF THE INVENTION

The term "alkyl", by itself or as part of another substituent, refers to straight or branched saturated hydrocarbon group joined by single carbon-carbon bonds having 1 or more carbon atoms, for example 1 to 30, for example 12 to 22 carbon atoms, for example 16 to 22 carbon atoms, for example 16 to 18 carbon atoms. When a subscript is used herein following a carbon atom, the subscript refers to the number of carbon atoms that the named group may contain. Thus, for example, C₁₂₋₂₂alkyl means an alkyl of 12 to 22 carbon atoms. Examples of alkyl groups are methyl, ethyl, propyl, isopropyl, butyl, isobutyl, *sec*-butyl, *tert*-butyl, 2-methylbutyl, pentyl, hexyl, heptyl, octyl, nonyl, decanyl, undecanyl, dodecyl, tridecanyl, tetradecanyl, pentadecanyl, hexadecanyl, heptadecanyl, octadecanyl, nonadecanyl, icosanyl, henicosanyl, docosanyl, tricosanyl, tetracosanyl, pentacosanyl, hexacosanyl, heptacosanyl, octacosanyl, nonacosanyl, triacontanyl, and the chain isomers thereof. Alkyl groups have the general formula CₙH₂ₙ₊₁.

The degree of esterification may vary within wide ranges, but is preferably at least 10%, which means that at least 10% of the R¹, R³ and R⁴ groups are an ester moiety. More preferably the esterification degree is at least 25 %, most preferably at least 50 %. In particular applications a substantially complete esterification may be envisaged.

The peak molecular weight of the polymers used as or in the additive, i.e. the molecular weight of the additive within the candle fatty acid wax composition according to the invention, as measured by gel permeation chromatography, may vary within wide ranges, but it is preferably not below 25000 g/mole, more preferably at least 50.000 g/mole and not more than 250.000 g/mole, preferably not more than 200.000, more preferably not more than 150.000. The peak molecular weight is preferably not more than 500.000 g/mole, preferably not more than 400.000 g/mole, more preferably not more than 250.000 g/mole, most preferably not more than 200.000 or not more than 150.000 g/mole. It is however remarked that the preferred molecular weight may vary depending on the composition of the additive.

The term "stereoisomers" as used herein defines all the possible compounds made up of the same atoms bonded by the same sequence of bonds but having different three-dimensional structures which are not interchangeable, which the homopolymers and copolymers of the monomers of formula (X) may possess. The double bond in the monomer of formula (X), may be in a cis or in a trans configuration

The inventors have observed that the polymers of the invention are capable of acting as crystallisation inhibitors for the fatty acid based wax composition, thereby limiting the risk of formation of large visible crystals. In addition, the risk to further effects of shrinking of the wax phase upon crystallisation and the ensuing cracking of the wax may be minimised. Since crystallisation is counter-acted, re-crystallisation of the wax composition a few hours after solidification of the wax had occurred, is counteracted as well, therewith reducing the risk of air expulsion during crystallisation and the formation of pits and bubbles on the candle surface as a result of such air expulsion.

By the term "crystallization inhibitor" is meant a material which inhibits crystallization of the wax composition of this invention or reduces the amount of fatty acid that crystallizes. In particular by the term "crystallization inhibitor" is meant a material which inhibits crystallization of the wax composition to the extent that at a temperature of 10 °C no visible crystals, with an average particle size of more than 1000 nm, are observed.

The additives of the invention are capable of improving the capillary action of the wick and of improving the burning properties of the candle, when added in appropriate concentrations.

In order to minimise the risk that the additive may adversely affect the burning properties of the candle wax, the concentration of the additive in the candle wax composition will be kept as small as possible. Thereby the concentration of the additive is preferably selected in such a way that the desired inhibition of the crystallisation of the candle wax brought about by the additive is not compromised. To achieve these effects the candle fatty acid wax composition of the present invention will usually comprise a sufficient amount of the additive, in particular the candle fatty acid wax composition will contain at least 50 ppm of the additive relative to the fatty acid wax composition, more preferably at least 100 ppm, most preferably at least 200 ppm to ensure the envisaged inhibitory effect. Preferably, the additive will be present in the candle fatty acid wax composition in an amount of less than 1000 ppm relative to the fatty acid wax composition, preferably less than 750 ppm, more preferably less than 500 ppm. The concentration ranges described above permit minimising the risk of adversely affecting the burning properties of the candle and the risk of clogging of the wick.

### The additive - homopolymers

Particularly preferred additives for use as a crystallization inhibitor in the candle fatty acid wax composition of this invention are homopolymers of a monomer of formula (X) R¹ - CH = CR³R⁴

A first group of particularly preferred additives include those homopolymers of the monomer according to formula (X) wherein R¹ and R³ are hydrogen and R⁴ is -C(=O)-OR⁵ in an acrylate moiety, or wherein R¹ is hydrogen, R³ is CH₃, and R⁴ is -C(=O)-OR⁵ in a methacrylate moiety, esters of polyacrylate being especially preferred. The additive may however also comprise a mixture of an ester of an acrylate based polymer and an ester of a methacrylate based polymer.

Another group of preferred additives include those homopolymers of the monomer according to formula (X) wherein R³ is hydrogen, and R¹ and R⁴ are -C(=O)-OR⁵,which is a fumarate.

A still further group of preferred additives include those homopolymers of the monomer according to formula (X) wherein R¹ is hydrogen, R³ is -C(=O)-OR⁵ and R⁴ is -CH₂-C(=O)-OR⁵. Polymers of these compounds will usually be referred to as polymers of itaconic acid ester. Another still further group of preferred additives include those homopolymers of the compound according to formula (X) wherein R¹ and R³ are -C(=O)-OR⁵ and R⁴ is -CH₂-C(=O)-OR⁵ in formula (X), i.e. polymers of aconitic acid ester.

According to a still further preferred embodiment, R¹ is -CH₂-C(=O)-OR⁵, R³ is hydrogen, and R⁴ is -C(=O)-OR⁵,providing polymers of glutaconic acid esters.

The additive may also comprise polymers of a monomer according to formula (X) in which R¹ and R³ are hydrogen and R⁴ is -O-C(=O)-R⁵. These compounds will usually be fatty acid esters of polyvinylalcohol, or ethylene-vinyl ester copolymers.

Within the scope of this invention, copolymers of two or more different monomers of formula (X) may be used as the additive. Within the scope of this invention, a mixture or blend of two or more different homopolymers, or copolymers may also suitably be used.

Depending on the envisaged application and the composition of the fatty acid wax composition, the additive may comprise a mixture of two or more different polymers of a monomer according to formula (X).

### The additive - copolymers

Another type of additives suitable for use with the present invention include co-polymers, for example copolymers of two different monomers of formula (X), for example copolymers of two esters selected from maleic acid ester, itaconic acid ester, citraconic acid ester, mesaconic acid ester, and fumaric acid ester, and mixtures of these copolymers.

The term "homopolymer" refers to a polymer which is made by linking the same monomer, in the absence of co-monomers.

The term "copolymer" refers to a polymer, which is made by linking two different types of monomer, i.e. two different monomers of formula (X) having different substituents or stereoisomery.

### Hyperbranched or comb Polyesters

The esterified homo- or copolymers described above may take the form of "comb polyesters", which designate polymers with a polymer backbone from which a plurality of long chain hydrocarbyl branches are pendant. Comb polymers are discussed in "Comb-Like Polymers. Structure and Properties", N. A. Plate and V P Shibaev, J.Poly. Sci. Macromolecular Revs., 8, p 117 to 253 (1974). The branches of the comb polymer usually contain from 1 to 30 carbon atoms, and are bonded directly via a covalent bond or indirectly to the backbone. Indirect bonding may for example occur via interposed atoms or groups, and includes covalent and/or electrovalent bonding.

Esterification of the acid or anhydride group with the alcohol moiety may be achieved by any suitable technique. The degree of esterification may vary within wide ranges, but is preferably at least 50%. Examples of alcohols suitable for the esterification include n-decan-1-ol, n-dodecan-1-ol, n-tetradecan-1-ol, n-hexadecan-1-ol, and n-octadecan-1-ol, branched alcohols for example 1-methylpentadecan-1-ol or 2-methyltridecan-1-ol, or mixtures of branched and non-branched alcohols or fatty alcohols. Fatty alcohols will usually be available as a mixture of various alcohols, the composition depending on the origin of the fats from which they are derived and the purification to which they have been subjected.

### The alkyl moieties in the polymer

The alkyl moieties R⁵ in the above described polymers may have 12-22 and 1-30 carbon atoms, respectively, and these alkyl moieties may be saturated and unsaturated. R⁵ are preferably alkyl moieties having C12-22 carbon atoms, whereas mixtures which mainly comprise C16-18 carbon atoms will usually make up the major part of the alkyl moiety.

Commercially available fatty alcohols used in the esterification may comprise various fatty alcohols in varying concentrations. In the present invention preferably use is made of mixtures of fatty alcohols of the following composition:
- maximum 15.0 wt. % of C₁₄ fatty alcohol,
- 30.0-70.0 wt. of C₁₆ fatty alcohol,
- 30.0-70.0 wt. % of C₁₈ fatty alcohol,
- < 2.0 wt. % of C₂₀₋₂₄ fatty alcohol,
- < 2.0 wt. % of C₁₇ fatty alcohol.

Although fatty alcohols with a smaller or larger number of carbon atoms may be used, their concentration is preferably kept as small as possible

Most preferred additives used with the present invention are selected from polypalmityl stearyl acrylate and polyvinyl palmitate stearate, or mixtures thereof.

Where in formula (X) R⁴ is -O-C(=O)-R⁵, which is for example the case in polyvinylalcohol, the esterification will usually be carried out with fatty acids, like fatty acid mixtures of the following composition:
- maximum 15.0 wt. % of C₁₄ fatty acid,
- 30.0-70.0 wt. of C₁₆ fatty acid,
- 30.0-70.0 wt. % of C₁₈ fatty acid,
- < 2.0 wt. % of C₂₀₋₂₄ fatty acid,
- < 2.0 wt. % of C₁₇ fatty acid.

### Molecular weight of the additive

The peak molecular weight of the additive may vary within wide ranges. Usually the peak molecular weight of the additive will not be below 25000 g/mole, more preferably the molecular weight of the additive will be at least 50.000 g/mole and not more than 250.000 g/mole, preferably not more than 200.000, more preferably not more than 150.000.

The peak molecular weight can be measured by Gel Permeation Chromatography (GPC), using Agilent MIXED-B and MIXED C columns, and a refractive index detector. The eluens may be THF at a constant flow rate of 1 mL/min, and a run time of 30 minutes. The temperature of the column oven is kept at around 35°C. 50 µL of sample solution are injected per analysis. The column set is calibrated with narrow MWD polystyrene (PS) standards in the range of 1 kg/mol to 700 kg/mol. The peak molecular weight refers to the molecular weight associated with the signal maximum of the detector of the GPC.

### Preparation of the additive according to the invention

The additives of the present invention may be prepared by first transforming commercially available monomers, and a subsequent (co-)polymerization of the transformed monomers. Transformation of the commercially available monomers may be for instance achieved by transacetylation of vinyl acetate to vinyl stearate, or by transesterification of methyl methacrylate or esterification of acrylic acid.

Herein below the synthesis of poly(palmityl-30,stearyl-70acrylate) is described. The monomer was synthesized at ambient temperature in dichloromethane:

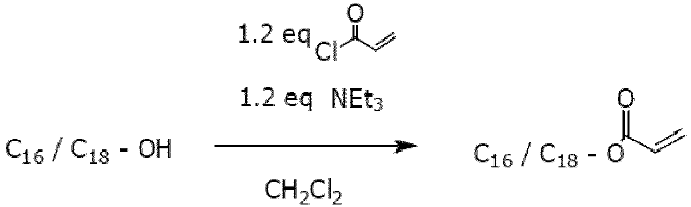

Starting from 26 g fatty alcohol (Oleon Radianol 1768; 30% C16, 70% C18), 21 g of the acrylate monomer was obtained. Proton and carbon-13 NMR showed spectra as expected for the pure compounds. GC-MS analysis showed two major signals corresponding with the monomers with a C16 and C18 chain. Monomers with varying chain lengths can be prepared similarly by using other commercially available fatty alcohols.

The corresponding polymer was synthesized as follows:

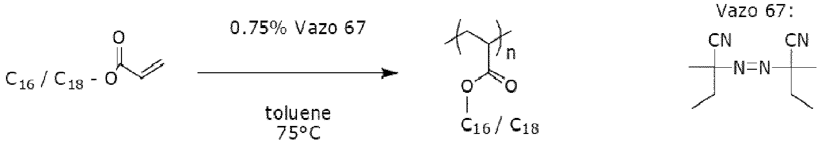

The initiator Vazo 67 is typically added in concentrations between 0,1 and 1,00%. The molecular weight of the polymer can be varied by varying the concentration of the monomer in the toluene solvent. Starting from 1g of acrylate monomer in 5ml of toluene, a typical peak molecular weight of 40000 is obtained. Starting from 1g of acrylate monomer in 2ml of toluene, a typical peak molecular of 68000 was obtained.

The polyvinylalkylate polymers were synthesized with the commercially available monomers vinylstearate and vinylpalmitate (Sigma Aldrich, Fischer Scientific). The synthesis of the polyvinylalkylates was done in a similar way as for the polyalkylacrylates.

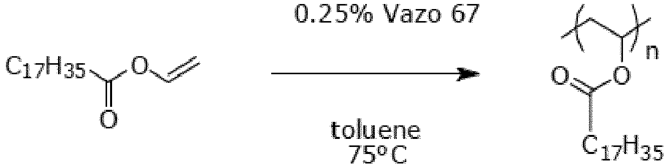

Alternatively, the additives of the present invention may be prepared by grafting fatty alcohols or acids on commercially available polymers. For example, polyvinyl alcohol (PVA), polymethyl acrylate (PMA), polymethylmethacrylate (PMMA) or polyacrylic acid (PAA) with a molecular weight of approximately 90.000 g/mole may be grafted with fatty acids or fatty alcohols.

Some polymers like for instance polyvinylstearate with MW 87000 or polystearylmethacrylate with MW 128000 are commercially available from Sigma Aldrich.

### The fatty acid wax composition

The fatty acid wax composition contained in the candle wax composition of this invention, is preferably fully fatty acid based. Although other materials, for example paraffin may be comprised in the wax composition, their concentration is preferably kept to a minimum. A fatty acid composition suitable for use as a wax composition in the candle wax of the present invention may be obtained from any suitable source, for example it may be obtainable from an animal or a plant source.

Examples of fatty acids suitable for use in the candle wax composition of this invention include commercially available fatty acids, which are usually provided as a fatty acid composition comprising a mixture of several fatty acids in various concentrations. This way, stearic acid will usually designate a fatty acid composition with stearic acid as the major component and other fatty acids having less than 18 or more than 18 carbon atoms present in smaller concentrations. Usually stearic acid and palmitic acid will make up the major part of the fatty acid composition.

In one embodiment, the candle fatty acid wax composition comprises as fatty acid wax, at least one C₁₂-C₂₂ fatty acid, preferably at least one C₁₆-C₂₂ fatty acid wherein the fatty acid may be saturated or unsaturated.

In one embodiment, the candle wax composition comprises as fatty acid wax, at least one saturated C₁₆-C₂₂ fatty acid or a mixture of two or more thereof, wherein the fatty acid is saturated.

Fatty acid compositions suitable for use with the present invention typically contain
- maximum 15.0 wt. % of C₁₄ fatty acid,
- 30.0-70.0 wt. %, preferably 34.0-68.0 wt. % of C₁₆ fatty acid,
- 30.0-60.0 wt. % of C₁₈ fatty acid,
- < 2.0 wt. % of C₂₀₋₂₄ fatty acid,
- < 2.0 wt. % of C₁₇ fatty acid.

Although fatty acids with a smaller or larger number of carbon atoms may be present, their concentration is preferably kept as small as possible to ensure a narrow melting and solidification trajectory of the candle wax as a function of temperature and to minimise the risk of formation of large, visible crystals. A narrow melting and solidification trajectory is further important as it facilitates candle production, assists in keeping the risk of formation of visible crystals to a minimum, and ensures quick re-solidification after the candle has burnt.

The fatty acid based wax composition of this invention may comprise some C15 and C17 fatty acids for their ability to inhibit recrystallisation of the fatty acid wax composition, but their concentration is preferably kept within limits. The concentration of C15-C17 fatty acids in the stearic acid composition will usually be kept below 5.0 wt. %.

The fatty acid based wax composition of this invention may also comprise some C14 fatty acid, in amounts up to 7.50 wt. %, preferably 5.0 wt. %. The C14 fatty acid concentration in the stearic acid composition will usually be at least 0.1 wt. %, more preferably at least 1.0 wt. %.

The concentration of stearic acid in the fatty acid based wax composition will usually vary from 30-100 wt. %, preferably from 30-70 wt. % with respect to the weight of the fatty acid composition. The concentration of palmitic acid in the fatty acid composition will usually vary from 30-70 wt. %, preferably from 40-60 wt. %, more preferably from 40-55 wt. % with respect to the weigh of the fatty acid composition.

Within the scope of this invention the term "stearic acid" includes any of the commercial grades of stearic acid. Whereas stearic acid describes the pure chemical compound octadecanoic acid C₁₇H₃₅COOH, commercial practice uses this wording to refer to mixtures comprising major amounts of both octadecanoic acid and the 16 carbon atom hexadecanoic acid or palmitic acid C₁₅H₃₁COOH, together with minor amounts of lower and higher homologs, the corresponding monounsaturated acids 9-octadecenoic acid (oleic acid, C₁₇H₃₃COOH) and 9-hexadecenoic acid (palmitoleic acid, C₁₅H₂₉COOH) and a variety of trace impurities characteristic of the source of the raw material and the method used in its refining. Suitable stearic acids include those having an acid number of 190-220 mg KOH/gram and a maximum iodine number of 7. Although the ability to burn in a candle is expected to be substantially identical in all commercial grades of stearic acid, differences may exist in their physical properties such as melting point, melt viscosity and odour. For these reasons, grades of stearic acid obtained from vegetable raw materials are especially preferred.

Commercially available stearic acid compositions may have the composition disclosed in the table below:

| component | Concentration in wt. % |
|---|---|
| C₁₄ | Max. 10.0 wt. %, preferably max. 7.5 wt. % |
| C₁₆ | 34.0-68.0 wt. % |
| C₁₈ | 31.0-60.0 wt. % |
| C₁₇ | < 2.0 wt. % |
| C₂₀ - C₂₄ | < 2.0 wt. % |

The candle fatty acid wax composition of this invention may further comprise one or more vegetable oils, those which are not liquid between 0°C and 30°C being preferred. Suitable vegetable oils include corn oil, cottonseed oil, deodorized coconut oil, palm oil, soybean oil, sunflower oil, safflower oil, grape seed oil, olive oil, canola oil, jojoba oil, and any mixture thereof. When present, the concentration of the vegetable oil in the candle fatty acid wax composition of this invention will usually be less than 5.0 wt. % with respect to the weight of the candle wax composition.

In addition, an amount of mono-, di- and/or triglycerides of saturated and unsaturated fatty acids may be present as well, although the skilled person will usually attempt to limit their concentration to a maximum of 10.0 wt. % in order to provide a satisfactory colour and colour stability. Examples of suitable triglycerides include non-hydrogenated, partially or fully hydrogenated vegetable oil and animal fat or animal lipids. Examples of monoglycerides suitable for use in the candle fatty acid wax composition of this invention include glyceryl moonoleate, glyceryl monolaurate, and glyceryl monostearate. Examples of di-glycerides suitable for use in the candle fatty acid wax composition of this invention include glyceryl dioleate, glyceryl dilaurate and glyceryl distearate. The nature and amount of glyceride present may be adapted by the skilled person without undue burden to achieve the desired capillary activity of the wick, resulting in the desired burning properties.

If so desired, the fatty acid wax composition may include other components such as a mineral wax, a microcrystalline wax, a natural wax for example a wax of vegetable or animal or insect origin, and/or other renewable resource based material. Examples of such waxes suitable for use in the candle fatty acid wax composition of this invention include arrayan wax, carnauba wax, sugar cane wax, and especially candelilla wax and hydrogenated castor oil. The proportion of vegetable derived wax in the composition of this invention will usually be not more than a few wt. % in order to minimise the risk to adversely affect the burning characteristics. The waxes not formed from renewable resources, for example mineral wax, are preferably only present in minor concentrations in order to minimise the risk to adversely affect the burning characteristics. The mineral wax may be a petroleum wax such as a medium paraffin wax, a microcrystalline paraffin wax, and/or a petroleum wax obtained from crude oil refined to other degrees. It may be added to obtain specifically desired properties. Commercially available paraffin waxes usually consists of essentially straight chain or normal paraffin hydrocarbons of the CₙH₂ₙ₊₂ type, with a melting point between about 50 °C and 77 °C.

The candle fatty acid wax composition may contain one or more oxidation inhibitors. Those which are odorless or possess an agreeable odor are particularly preferred. Suitable oxidation inhibitors include Vitamin C ascorbic acid and Vitamin E tocopherol, as well as the vitamin-inactive isomer erythorbic acid, oxy-acids of phosphorus such as phosphoric acid and polyphosphoric acid, aliphatic hydroxypolycarboxylic acids such as citric acid, malic acid, and tartaric acid, EDTA and its sodium and calcium salts, and alkylsubstituted phenols such as BHT, BHA, thymol, carvacrol, 4,4'-butylidenebis(2-t-butyl-5-methylphenol), 1,1,3-tris(2-methyl-4-hydroxy-5-t-butylphenyl)butane and 3,5-di-t-butyl-4-hydroxyphenyl-propionic acid and its esters with C1-C18 monohydric alcohols or 2-6 functional polyhydric alcohols. When present, the proportion of oxidation inhibitor is generally in the range from 0.005 wt. % to 1 wt. % by weight, preferably from 0.01 wt. % to 0.5 wt. %. The use of oxidation inhibitor in the composition of the invention is particularly preferred in compositions including vegetable oil.

The candle fatty acid wax composition may further comprise the usual additives including colorants, fragrances (e.g., fragrance oils), antioxidants, light stabilizers, insect repellants, and migration inhibitors.

The candle fatty acid wax composition of this invention is suitable for the production of the usual candles, which contain a wick. The present invention therefore also relates to a candle produced from the candle fatty acid wax composition described above. A frequently used production process comprises the steps of supplying a heated candle wax composition to a mold into which a wick has been disposed. The wax is then left to cool in the mold to solidify the wax. The candle fatty acid wax composition of this invention is also suitable for the production of candles using compression molding, where wax particles are supplied to mold and molded under pressure, and for the production of container candles where the candle wax composition is poured in a container with a wick. The candles may be over-dipped, in the same type or a different type of wax than used in the compression molding process. Of course, many other candle forming techniques may be used.

The invention also relates to a process for producing a candle fatty acid wax composition, wherein an additive of the invention is mixed with a fatty acid wax composition to obtain a candle wax composition.

In one embodiment of the process according to the invention, the fatty acid wax composition comprises at least one saturated C₁₆-C₂₂ fatty acid or a mixture of two or more thereof, wherein the fatty acid is saturated.

In one embodiment of the process according to the invention, the fatty acid comprises between 30-70 wt. %, preferably 40-60 wt. %, more preferably 40-55 wt. % with respect to the weigh of the fatty acid composition of palmitic acid.

In one embodiment of the process according to the invention, the fatty acid comprises between 30-100 wt. %, preferably 30-70 wt. % with respect to the weight of the fatty acid composition of stearic acid.

The fatty acid wax composition of this invention is also suitable for the production of other wax-based articles, for example, crayons, fire logs, tarts, billets, sheets, profiles, and the like. The most common production process for producing such articles will use extrusion, pouring, dipping and compression molding.

The inventors have observed that the use of the above described additive in combination with a fatty acid wax composition permits the reduction of post-crystallization to a minimum. By post-crystallization is meant a crystallization which occurs a few hours after solidification of the wax composition has taken place. Post-crystallization is associated with expulsion of air from the wax composition and the formation of an uneven surface of the candle.

The invention is further illustrated in the examples below.

### EXAMPLES

### Example 1

A polyacrylate polymer was subjected to an esterification reaction with a fatty alcohol mixture which contained respectively 50 wt. % of stearic alcohol and 50 wt. % of palmitic alcohol (entry numbers 1 and 2), 70 wt. % of stearic alcohol and 30 wt. % of palmitic alcohol (entry number 3), 30 wt. % of stearic alcohol and 70 wt. % of palmitic alcohol (entry number 4). The esterified polyacrylate polymers had the peak molecular weight indicated in the table below. The peak molecular weight was measured by GPC, according to the method described above.

The thus obtained esterified polyacrylates were mixed in the amounts indicated in the table below (in ppm relative to the fatty acid wax composition), with the following fatty acid wax compositions:
- Wax composition A contained 36.7 wt. % of C16 fatty acid and 56.6 wt. % of C18 fatty acid. The remainder consisted of C14, C15, C17, C20 and C22 fatty acids.
- Wax composition B contained 45.0 wt. % of C16 fatty acid and 53.2 wt. % of C18 fatty acid. The remainder consisted of C14, C15, C17, C20 and C22 fatty acids.
- Wax composition C contained 63.0 wt. % of C16 fatty acid and 35.6 wt. % of C18 fatty acid. The remainder consisted of C14, C15, C17, C20 and C22 fatty acids.

Cup or container candles were prepared by mixing a molten wax composition (A, B, or C) with an amount of esterified polyacrylate and left to solidify. Thereafter, the formation of visible crystals in the fatty acid phase was evaluated as follows:
1. - - significant number of visible crystals
2. - high number of visible crystals
3. +/- visible crystal
4. + few number of visible crystals
5. ++ Almost no visible crystals
Table 1 Amount of Peak additive Entry Polyalkylacrylates molecular relative to Wax Wax Wax nr. Polyalkylacrylates molecular relative to composition composition composition weight the wax A B C composition 50% palmitic 1 alcohol / 50% 337.000 100 ppm - + +/stearic alcohol 50% palmitic 2 alcohol / 50% 70.000 100 ppm ++ ++ + stearic alcohol 3 30 % palmitic 100 ppm ++ + +/-- alcohol / 70 % 68.000 stearic alcohol 500 ppm ++ + +/-4 70% palmitic 200 ppm ++ ++ +/-alcohol / 30 % 68.000 stearic alcohol 500 ppm ++ ++ +

### Example 2

A polyvinylstearate polymer and a polyvinyl-palmitate-stearate polymer were prepared by an esterification reaction in such a way that the alkyl moiety contained respectively
- only C18:0 alkyl moieties,
- 50 wt. % of C18:0 alkyl moieties and 50 wt. % of C16:0 alkyl moieties.

The polyvinyl polymers had the peak molecular weight indicated in the table below. The peak molecular weight was measured by GPC according to method described above.

The thus obtained esterified polyvinyl polymers were mixed in the amounts indicated in the table below, with the following wax compositions:
- Wax composition A contained 36.7 wt. % of C16 fatty acid and 56.6 wt. % of C18 fatty acid. The remainder consisted of C14, C15, C17, C20 and C22 fatty acids.
- Wax composition B contained 45.0 wt. % of C16 fatty acid and 53.2 wt. % of C18 fatty acid. The remainder consisted of C14, C15, C17, C20 and C22 fatty acids.

Cup candles were prepared by mixing a molten wax composition (A or B) with an amount of esterified polyvinyl and left to solidify. Thereafter, the formation of visible crystals in the fatty acid phase was evaluated as described in example 1. The results are summarized in table 2 below.

**Table 2**

| Entry nr. | Polyvinyl alkylates | Peak molecular weight | Amount of additive relative to the wax composition | Wax composition A | Wax composition B |
|---|---|---|---|---|---|
| 5 | 98% stearic acid | 78.000 | 100 ppm | +/- | +/- |
| 6 | 50% palmitic acid / 50% stearic acid | 79.000 | 100 ppm | +/- | + |
| 7 | 98% stearic acid | 17.000 | 100 ppm | - | - |

The same experiments were repeated with the fatty acid wax compositions A, B, and C, but with no addition of the polymers according to the invention. Thus, cup candles were prepared by filling them with a molten wax composition (A, B, or C) and left to solidify. All wax compositions, with no exception, showed a significant number of visible crystals.

## Claims

1. A candle fatty acid wax composition **characterized in that** it comprises as additive, at least one homopolymer of a monomer of formula (X), or at least one copolymer of the monomers of formula (X), stereoisomers, and any mixture thereof,
R¹ - CH = CR³R⁴ (X)
wherein
R¹ is each independently selected from hydrogen, -C(=O)-OR⁵, and -CH₂-C(=O)-OR⁵;
R³ is each independently selected from hydrogen, -CH₃, - C(=O)-OR⁵, and -CH₂-C(=O)-OR⁵;
R⁴ is each independently selected from -C(=O)-OR⁵, -O-C(=O)-R⁵, and -CH₂-C(=O)-OR⁵; and
R⁵ is each independently a C₁₂₋₂₂alkyl;
said additive having a peak molecular weight of between 25.000 and 250.000 g/mole (according to gel permeation chromatography (GPC) measurement).

2. The candle fatty acid wax composition according to claim 1, wherein R¹ and R³ are hydrogen and R⁴ is -C(=O)-OR⁵.

3. The candle fatty acid wax composition according to claim 1, wherein R¹ is hydrogen, R³ is CH₃, and R⁴ is -C(=O)-OR⁵.

4. The candle fatty acid wax composition according to claim 1, wherein R¹ is -C(=O)-OR⁵, R³ is CH₃, and R⁴ is -C(=O)-OR⁵, said R¹ and R⁴ substituents being configured in cis or trans relative to each other

5. The candle fatty acid wax composition according to claim 1, wherein R¹ and R³ are hydrogen and R⁴ is -O-C(=O)-R⁵.

6. The candle fatty acid wax composition according to claim 1, wherein R³ is hydrogen, and R¹ and R⁴ are -C(=O)-OR⁵,said R¹ and R⁴ substituents being configured in cis or trans relative to each other.

7. The candle fatty acid wax composition according to claim 1, wherein R¹ is hydrogen, R³ is -C(=O)-OR⁵ and R⁴ is -CH₂-C(=O)-OR⁵.

8. The candle fatty acid wax composition according to claim 1, wherein R¹ and R³ are -C(=O)-OR⁵ and R⁴ is -CH₂-C(=O)-OR⁵, said R¹ and R³ substituents being configured in cis or trans relative to each other.

9. The candle fatty acid wax composition according to claim 1, wherein R¹ is -CH₂-C(=O)-OR⁵, R³ is hydrogen, and R⁴ is -C(=O)-OR⁵,said R¹ and R⁴ substituents being configured in cis or trans relative to each other.

10. The candle fatty acid wax composition according to any one of the previous claims wherein in formula (X), R⁵ may be independently of each other a C₁₆₋₂₂ alkyl; preferably a C₁₆₋₁₈alkyl; preferably a C₁₆alkyl and a C₁₈alkyl within the same homopolymer.

11. The candle fatty acid wax composition according to any one of the previous claims, wherein the additive is a mixture of two or more homopolymers or copolymers of a monomer of formula (X), and stereoisomers thereof.

12. The candle fatty acid wax composition according to any one of the previous claims, wherein the peak molecular weight of the additive is between 25.000 g/mole and 150.000 g/mole (according to GPC measurement).

13. The candle fatty acid wax composition according to any one of the previous claims, wherein the additive is comprised in the fatty acid wax composition in an amount of less than 1000 ppm relative to the fatty acid wax composition, preferably less than 500 ppm, and at least 50 ppm, preferably at least 100 ppm.

14. The candle fatty acid wax composition according to any one of the previous claims, wherein the fatty acid wax composition comprises at least one C₁₂-C₂₂ fatty acid, preferably at least one C₁₆-C₂₂ fatty acid or a mixture of two or more thereof, wherein the fatty acid may be saturated or unsaturated.

15. The candle fatty acid wax composition according to claim 14, wherein the fatty acid comprises between 30-70 wt. % of palmitic acid, preferably 40-60 wt. %, more preferably 40-55 wt. %, with respect to the weight of the fatty acid composition.

16. The candle fatty acid wax composition according to claim 14 or 15, wherein the fatty acid comprises between 30-100 wt. % of stearic acid, preferably 30-70 wt. %, with respect to the weight of the fatty acid composition.

17. A process for producing a candle fatty acid wax composition according to any one of claims 1-16, wherein an additive as defined in any one of claims 1-13 is mixed with a fatty acid wax composition to obtain a candle wax composition.

18. A candle fatty acid composition obtainable according to the process of claim 17, or obtainable from the candle fatty acid wax composition according to any one of claims 1-16.

19. Use of an additive as defined in any one of claims 1-13 as a crystallisation inhibitor for a candle fatty acid wax.
